# EUROPÄISCHE PATENTANMELDUNG

(11) **EP 4 851 973 A1**
(43) Veröffentlichungstag der Anmeldung: **09.12.2026**
(21) Anmeldenummer: 25181216.0
(22) Anmeldetag: 05.06.2025
(51) Int. Cl.: G09B 5/04, G09B 5/06, G09B 7/00

(54) **SPRACHBASIERTES LERNSYSTEM FÜR KINDER**

(71) Anmelder: Polingo GmbH, 61462 Königstein i.T. (DE)
(72) Erfinder: SPIELMANN, Nicole, 61462 Königstein i.T. (DE)
(74) Vertreter: Dr. Langfinger & Partner

(57) **Zusammenfassung**

Die vorliegende Erfindung betrifft ein Sprachbasiertes Lernsystem für Kinder, umfassend: ein spielzeugartiges Endgerät ohne Bildschirmanzeige mit einem Mikrofon und einem Lautsprecher zur auditiven Interaktion mit dem Kind,
ein Elterngerät in Form eines Smartphones, Tablets oder Computers und/oder einer Smartwatch, das über eine drahtlose Verbindung mit dem Spielzeug kommuniziert, und
einen externen Server mit einem Sprachverarbeitungssystem, wobei das Elterngerät als alleinige Vermittlungsinstanz (Gateway) zur Kommunikation mit dem externen Server dient und dafür eingerichtet ist, Sprachinhalte zu kontrollieren bzw. zu steuern, Kommunikationsverbindungen zu filtern und Nutzer zu identifizieren bzw. authentifizieren, und wobei der externe Server ein Klbasiertes Sprachverarbeitungssystem umfasst, das eingehende Spracheingaben analysiert und kindgerechte Sprachantworten generiert, welche über das Elterngerät an das Spielzeug zur Ausgabe über den Lautsprecher übermittelt werden und optional der externe Server auch ein KI-Wissensmodell umfasst.

## Beschreibung

Die vorliegende Erfindung betrifft ein sprachbasiertes Lernsystem, bevorzugt für Kinder, insbesondere ein Spielzeug mit auditiver Interaktion, das in Verbindung mit einem Elterngerät und einem externen Server arbeitet. Die Erfindung ist insbesondere geeignet zur Bildschirmvermeidung im (früh)kindlichen Spracherwerb und zur elterlich kontrollierten Nutzung von, insbesondere Kl-gestützten, Lerninhalten.

Es sind verschiedene interaktive Spielzeuge bekannt, die über Mikrofon und Lautsprecher verfügen und Audiodialoge ermöglichen. Solche Systeme kommunizieren entweder direkt mit einem PC (z. B. US 5,746,602), einem Mobilgerät (z. B. US 9,039,482), einem Fernseher (z. B. EP 2 345 471 B1) oder einem Cloud-Server (z. B. US 2018/0117479). Dabei fehlt jedoch regelmäßig eine vermittelnde Instanz, die eine inhaltliche Kontrolle und datenschutzrechtlich gesicherte Verarbeitung durch die Eltern ermöglicht.

Bekannte Systeme wie "Hello Barbie" oder die Puppe "Cayla" sind darüber hinaus aufgrund ihrer direkten Kommunikation mit einem Server datenschutzrechtlich umstritten und in einigen Ländern verboten. Auch fehlt bei diesen Ansätzen eine Möglichkeit der elterlichen Einflussnahme auf Lerninhalte sowie deren Präsentation, drunter die Sprechgeschwindigkeit, Komplexität von Sätzen, Betonungen, etc. Gemäß dem Stand der Technik werden Inhalte vielmehr zentral vorgegeben und "abgearbeitet".

Es besteht daher Bedarf an einem Lernsystem, das über ein bildschirmfreies Spielzeug eine kindgerechte Sprachinteraktion ermöglicht sowie kindgerechte Inhalte mittels Kl-aufbereitet, ohne dass das Spielzeug selbst Zugang zum Internet besitzt, wobei Inhalte durch Eltern bzw. Bezugspersonen kontrolliert, gesteuert und optional datenschutzfreundlich (vor)verarbeitet werden können.

Die Aufgabe der vorliegenden Erfindung ist es daher, ein System bereitzustellen, das eine sichere, pädagogisch wertvolle und auf das Alter des Kindes anpassbare Sprachinteraktion erlaubt sowie ein Kl-Wissensmodel bereitstellt, dass an die individuelle Situation des Kindes angepasst werden kann.

Diese Aufgabe wird gelöst durch ein sprachbasiertes Lernsystem für Kinder, umfassend:
ein spielzeugartiges Endgerät ohne Bildschirmanzeige mit einem Mikrofon und einem Lautsprecher zur auditiven Interaktion mit dem Kind,
ein Elterngerät in Form eines Smartphones, Tablets, Computers und/oder einer Smartwatch, das über eine drahtlose Verbindung mit dem Spielzeug kommuniziert, und
einen externen Server mit einem Sprachverarbeitungssystem, wobei das Elterngerät als alleinige Vermittlungsinstanz (Gateway) zur Kommunikation mit dem externen Server dient und dafür eingerichtet ist, Sprachinhalte zu kontrollieren bzw. zu steuern,
Kommunikationsverbindungen zu filtern und Nutzer zu identifizieren bzw. authentifizieren, und wobei
der externe Server ein Kl-basiertes Sprachverarbeitungssystem umfasst, das eingehende Spracheingaben analysiert und, insbesondere kindgerechte, Sprachantworten generiert, welche über das Elterngerät an das Spielzeug zur Ausgabe über den Lautsprecher übermittelt werden, und
optional der externe Server auch ein KI-Wissensmodell umfasst.

Diese Struktur ermöglicht es, Kinder in ein auditives Lernumfeld einer Kl-gestützten Wissensumgebung einzubinden, ohne sie digitalen Bildschirmen auszusetzen. Das spielzeugartige Endgerät selbst besitzt keine eigene Netzwerkanbindung und ist nicht in der Lage, unmittelbar mit einem Server oder dem Internet zu kommunizieren. Die gesamte Kommunikation erfolgt ausschließlich über das Elterngerät, welches als alleiniger Gateway fungiert. Dadurch verbleibt die Kontrolle sowie Steuerung über sämtliche Datenströme vollständig bei den Eltern bzw. Bezugspersonen (weitere Aufsichtspersonen für die Kinder wie beispielsweise Großeltern, Babysitter, Au-Pairs, etc.).

Das Elterngerät kann gemäß einer Ausführungsform der Erfindung vor der Weiterleitung von Spracheingaben an den Server eine Vorverarbeitung, Filterung oder Unterdrückung einzelner Datenpakete vornehmen. Ebenso kann es empfangene Antworten des Servers hinsichtlich Inhalt, Relevanz und Angemessenheit prüfen, bevor eine Übertragung an das Spielzeug erfolgt. Unautorisierte Datenübertragungen, unbeaufsichtigte Verbindungen oder ungewollte Inhalte können auf diese Weise wirksam verhindert werden, z.B. auch wenn der Server "gehackt" wurde. Das Elterngerät kann somit nicht nur ausschließlich der Identifizierung und/oder Authentifizierung dienen, um die Verbindung zwischen spielzeugartigem Endgerät und Server jeweils über sich zu aktivieren und zu steuern, sondern optional auch der weiteren Absicherung der Kommunikation.

Das System stellt damit ein Kommunikationsmodell bereit, das sowohl den Schutz personenbezogener Daten als auch die pädagogische Verantwortung der Eltern technisch unterstützt und absichert.

Das System erlaubt es darüber hinaus, die Lerninhalte und auch optional die Präsentationsform der Lerninhalte wie Sprechgeschwindigkeit, Wortwahl, Wiederholungen, etc., gezielt an die Bedürfnisse und das Alter des Kindes anzupassen. Hierzu können über das Elterngerät thematische Module vorgegeben, erweitert oder deaktiviert werden. So lässt sich beispielsweise festlegen, dass das Spielzeug ausschließlich kindgerechte Inhalte aus vordefinierten Kategorien wie Tiere, Farben oder Zahlen verwendet.

Auch eine stufenweise Freischaltung komplexerer Inhalte oder die Anpassung der Sprachebene an den Entwicklungsstand des Kindes ist über das Elterngerät möglich. Zudem können Interaktionszeitpunkte beschränkt, Pausen vorgegeben oder eine inhaltliche Verlaufskontrolle aktiviert werden.

Die Eltern sind damit in der Lage, nicht nur technische, sondern auch didaktische Vorgaben umzusetzen, wodurch sich das System in besonderem Maße für den (früh)kindlichen Spracherwerb, insbesondere auch in einer Ausführungsform mit Bezug auf Mehrsprachigkeit, und das spielerische Lernen eignet.

Eine Protokollierung der über das Elterngerät geführten Sprachinteraktionen kann optional erfolgen, um Lernfortschritte zu dokumentieren oder unerwünschte Inhalte im Nachgang nachvollziehen zu können.

Dabei kann es auch vorgesehen sein, dass auf dem Elterngerät ein Chatverlauf anzeigbar ist, mit dem nachvollzogen werden kann, was und wie kommuniziert wurde und ob z.B. die gesprochenen Wörter des Kindes richtig erfasst wurden.

Das erfindungsgemäße System weist gegenüber bekannten Lösungen eine Reihe signifikanter Vorteile auf. Durch die vollständige Trennung der Datenübertragung an den Server vom spielzeugartigen Endgerät durch das Elterngerät wird das Risiko unkontrollierter Datenübertragungen erheblich reduziert. Das Elterngerät übernimmt die alleinige Steuerungs-, Vermittlungs- und Kontrollfunktion und bildet damit eine datenschutzrechtlich abgesicherte Kommunikationsschnittstelle.

Eine unmittelbare Netzwerkverbindung zwischen Spielzeug und Server ist technisch ausgeschlossen. Gleichzeitig ermöglicht das System eine feinjustierbare pädagogische Steuerung der Inhalte, sodass sowohl inhaltliche als auch zeitliche Vorgaben präzise umgesetzt werden können.

Die Kombination aus technischer Zugriffsbeschränkung, elterlicher Inhaltsfreigabe oder -kontrolle und optionaler Protokollierung durch die Kombination von spielzeugartigem Endgerät, Elterngerät und Server stellt eine signifikante Verbesserung gegenüber dem Stand der Technik dar. Das erfindungsgemäße System schafft damit eine vertrauenswürdige, anpassbare und kindgerechte Lernumgebung, die eine sichere Sprachinteraktion ohne Bildschirmnutzung erlaubt.

Auch kann vorgesehen sein, dass das spielzeugartige Endgerät keine bildschirmbasierte Anzeigeeinheit und/oder keine eigene Verbindung zu einem Kommunikationsnetzwerk aufweist.

Durch den Verzicht auf jegliche Netzwerkfähigkeit und Bildschirmanzeige wird das spielzeugartige Endgerät technisch vereinfacht und sicherer im Sinne des Datenschutzes. Zudem wird die medienfreie Natur des Spielzeugs gestärkt und das Risiko ungewollter Verbindungen ausgeschlossen.

Des Weiteren kann es vorgesehen sein, dass die Kommunikation zwischen dem spielzeugartigen Endgerät und dem Elterngerät drahtlos über Bluetooth, WLAN und/oder NFC erfolgt.

Die Auswahl zwischen verschiedenen Kommunikationsprotokollen erlaubt eine flexible Anpassung an verschiedene Geräte und Sicherheitsanforderungen. In einer Umgebung mit mehreren Kindern kann eine Bluetooth-Verbindung sicherstellen, dass nur das autorisierte Spielzeug mit dem jeweiligen Elterngerät kommuniziert.

Das Elterngerät muss zu Beginn mit dem spielzeugartigen Endgerät sicher gekoppelt werden, entsprechende Protokolle zur Autorisierung von Bluetoothverbindungen sind im Stand der Technik bekannt und etabliert. Für die vorliegende Erfindung ist das Sicherstellen einer solchen sicheren und autorisierten Verbindung aus technischen und rechtlichen Aspekten gemäß einer Ausführungsform besonders relevant.

NFC eignet sich besonders gut zur einmaligen Aktivierung bestimmter Inhalte durch das Berühren eines Gegenstands. Hierzu wird später im Detail ausgeführt, wie dies erfindungsgemäß umgesetzt werden kann.

Gemäß einer Ausführungsform der vorliegenden Erfindung kann vorgesehen sein, dass das Elterngerät eine Software-Anwendung (App) ausführt, welche als Gateway-Schnittstelle zum externen Server dient und die Funktionen der Dateninhaltskontrolle, Kommunikationsfilterung und/oder Nutzeridentifizierung bereitstellt sowie insbesondere auch zur Steuerung der Geschwindigkeit der Sprachausgabe/ der Kommunikation, der Komplexität der Sätze, von Wiederholungen, etc. dienen.

Die App ermöglicht es insbesondere, Spracheingaben von Personen, insbesondere des Kindes, anzuzeigen, zu überwachen und gegebenenfalls vor der Weiterleitung an den Server zu modifizieren oder zu blockieren. Ebenso können serverseitige Sprachantworten vor der akustischen Ausgabe durch das Spielzeug geprüft und freigegeben werden. Durch die App kann zusätzlich sichergestellt werden, dass nur authentifizierte Nutzer (z. B. registrierte Elternteile) Konfigurationsänderungen vornehmen oder Inhalte freischalten können.

Die Verwendung einer solchen App bietet mehrere Vorteile. Sie erlaubt eine intuitive und benutzerfreundliche Oberfläche zur Steuerung aller relevanten Funktionen des Lernsystems. Eltern können individuelle Inhaltsfilter setzen, Lernmodule aktivieren oder deaktivieren, Nutzungszeiten festlegen oder altersbezogene Inhalte definieren. Des Weiteren kann es vorgesehen sein, dass Eltern weitere Aspekte wie die Komplexität der Interaktion, z.B. Satzbau, Ausgabegeschwindigkeit, Wortschatz, etc., vorgeben bzw. einstellen. Die App kann weiterhin ein Dashboard enthalten, das über Interaktionshäufigkeit, thematische Interessen oder gegebenenfalls kritische Sprachinhalte informiert. Auf diese Weise wird eine gezielte pädagogische Betreuung ermöglicht, ohne dass ein direkter Eingriff in die Nutzung durch das Kind erforderlich ist.

Dabei kann insbesondere vorgesehen sein, dass das Elterngerät Spracheingaben des Kindes mittels lokaler Spracherkennung (Voice-to-Text) vorverarbeitet, sodass nur vorverarbeitete oder gefilterte Textdaten an den externen Server übertragen werden.

Erfindungsgemäß kann die App optional eine lokale Verarbeitungsebene bereitstellen, bei der Spracheingaben zunächst lokal auf dem Elterngerät analysiert und nur bei Bedarf an den Server weitergeleitet werden. Dies erhöht die Datensicherheit und ermöglicht eine teilweise Offline-Funktionalität.

Ein Beispiel wäre, dass das Kind persönliche Informationen nennt (Name, Wohnort) - das Elterngerät kann solche Begriffe automatisch maskieren oder unterdrücken, bevor die Anfrage an den Server geht.

Auch kann es bevorzugt sein, dass das Elterngerät den Zugriff auf den Server nur nach erfolgreicher Authentifizierung eines autorisierten Nutzers freigibt.

Dies erhöht die Systemsicherheit und verhindert unautorisierte Datenverbindungen zwischen Spielzeug und Server.

Beispielsweise kann die Authentifizierung durch ein biometrisches Verfahren (Fingerabdruck, Gesichtserkennung) erfolgen oder durch einen Code. So ist ausgeschlossen, dass ein unbefugter Nutzer Inhalte verändert oder Zugriff auf Sprachverläufe erhält.

Auch kann vorgesehen sein, dass das spielzeugartige Endgerät einen NFC-Leser aufweist und/oder mit einem solchen verbindbar oder verbunden ist und/oder das Elterngerät mit einem NFC-Leser verbindbar oder verbunden ist, der dafür eingerichtet ist, mit einem NFC-Chip versehene Objekte zu erkennen und bei Erkennung eines solchen Objekts eine entsprechende Sprachausgabe, Vorlesefunktion oder sonstige Audioausgabe auszulösen.

Dabei kann es vorgesehen sein, dass die für die Sprachausgabe oder Vorlesefunktion vorgesehen Daten direkt auf dem NFC-Chip gespeichert sind und/oder das der NFC-Chip eine Referenz umfasst, die auf Daten verweist, die auf dem Elterngerät, dem Server und/oder einem weiteren Gerät gespeichert sind.

Die Sprachausgabe, Vorlesefunktion oder sonstige Audioausgabe kann somit direkt durch das spielzeugartige Endgerät oder durch den separaten NFC-Leser auf dem Elterngerät gestartet werden, wobei dann die Verarbeitung der Information aus dem NCF-Chip im Elterngerät erfolgt.

Dies ermöglicht eine physische Erweiterung des Systems durch Lernspielobjekte. Das Kind bleibt im realen Spielumfeld, während das Spielzeug digitale Sprachinhalte - u.a. auch Vorlesegeschichten und Lieder - zu realen Gegenständen bereitstellt.

Der mit dem spielzeugartigen Endgerät und/oder mit dem Elterngerät verbindbar oder verbundene separate NFC-Leser kann insbesondere ein ergänzendes Lernzubehör sein, beispielsweise in Form einer Lupe.

Der beispielhaft als Lupe ausgeführte NFC-Leser kann dabei als interaktives Zubehörteil ausgeführt sein, das zusätzlich über eine drahtlose Verbindung, etwa Bluetooth oder wiederum NFC, mit dem Spielzeug und/oder dem Elterngerät kommuniziert. Wenn der NFC-Leser mit dem Elterngerät kommuniziert, wird die Audioausgabe am spielzeugartigen Endgerät von einer App auf dem Elterngerät ausgelöst.

In einem solchen Fall dient der externe NFC-Leser in der beispielhaften Lupenform oder der in das spielzeugartige Endgerät integrierte NFC-Leser nicht nur der physikalischen Interaktion mit der Umwelt, sondern auch als steuerndes Eingabegerät im Lernsystem. Durch das Nähern oder Berühren des NFC-Lesers mit bestimmten Lernkarten, Bildern oder realen Objekten kann eine definierte Sprachausgabe initiiert werden, etwa das Benennen eines Tieres, Buchstabierens eines Wortes, das Abspielen eines Liedes, Vorlesen eines Buches bzw. einer Buchseite oder das Vorlesen einer Information aus einer Datenbank.

Darüber hinaus kann das Zusammenspiel von NFC-Erkennung und Sprachverarbeitung - ob mit einem integrierten oder einem extern NFC-Leser - so gestaltet sein, dass bei Erkennung eines NFC-Objekts automatisch ein Dialog eingeleitet wird. Wird beispielsweise ein Tierbild mit integriertem NFC-Chip erkannt, so kann das System zunächst den Tiernamen aussprechen, und optional anschließend eine Frage dazu stellen (z. B. "Was frisst der Löwe?") und die Antwort des Kindes auswerten. Auf diese Weise wird eine kontextbezogene, adaptive Sprachinteraktion ermöglicht, die auf realen Objekten basiert und dadurch eine besonders hohe Identifikation und Aufmerksamkeit beim Kind erzeugt.

Ein weiteres Beispiel ist ein Apfel-Modell mit integriertem NFC-Chip. Wenn das Kind diesen an das Spielzeug hält, sagt das Kuscheltier: "Das ist ein Apfel. Äpfel sind gesund."

Auch Bücher mit Kapiteln können per NFC seitenweise vorgelesen werden. Dies kann beispielsweise so ausgeführt sein, dass jeweils ein NFC-Chip auf einer Seite eines Buches ausgelesen wird und dann das spielzeugartige Endgerät die jeweilige Seite vorliest und ggf. Fragen hierzu stellt.

Es kann ebenfalls vorgesehen sein, dass das spielzeugartige Endgerät einen NCF-Leser umfasst als auch ein weiteres Objekt wie z.B. die erfindungsgemäße Lupe.

Die Verbindung physischer Objekte mit auditiven Lerninhalten erlaubt ein kontrolliertes Lernsetting.Die vollständige Kontrolle über die Reaktion auf erkannte Objekte verbleibt dabei weiterhin optional beim Elterngerät, welches festlegen kann, welche Inhalte zu welchen NFC-Objekten freigegeben oder gesperrt werden.

Dabei kann es vorgesehen sein, dass je nach Alter und Lernfortschritt oder ausgewähltem Lernmodus (Sprache, Allgemeinwissen) unterschiedliche Interaktionen mit dem Kind stattfinden,

Durch die Kombination aus haptischem Spiel und auditivem Feedback wird das Lernverhalten natürlich unterstützt. Kinder können interaktiv Begriffe und Inhalte verknüpfen.

Des Weiteren kann es bevorzugt sein, dass das spielzeugartige Endgerät eine oder mehrere Tasten und/oder Sensor umfasst, durch deren Betätigung vordefinierte Aktionen ausgelöst werden.

Durch einen Sensor kann beispielsweise erkannt werden, wenn das Spielzeug angehoben, gekippt oder auf eine Fläche gestellt wird, um daraufhin kontextabhängige Sprachausgaben zu initiieren. Auch kann dies durch Drucksensoren ausgelöst werden, die an einer oder mehreren Stellen im spielzeugartigen Endgerät angeordnet sind. Handelt es sich bei dem spielzeugartigem Endgerät beispielhaft um ein Kuscheltier, so können Sensoren in den Händen, Füßen und/oder dem Bauch integriert sein. Dies ermöglicht eine erweiterte Interaktion, indem durch z.B. das Drücken der Hand oder des Fußes gewisse Reaktionen ausgelöst werden wie z.B. das Abspielen eines Liedes. Beispielsweise spricht das spielzeugartige Endgerät über Zahlen und sagt dann "drücke meine Hand, dann spiele ich dir einen Zahlensong vor". Dies ermöglicht eine intuitive Bedienung auch für jüngere Kinder, die noch über keine ausgereifte Sprachsteuerung verfügen oder in ruhigen Umgebungen keine Spracheingabe tätigen sollen.

Das Kind kann daher erfindungsgemäß auch aufgefordert werden, mit dem Spielzeug zu interagieren: "Heb mich hoch", "Leg mich hin", "Drücke meine Hand" etc.

Die Kombination aus auditiver Interaktion und physischer Eingabe erlaubt ein multimodales Nutzungskonzept, das sowohl motorische als auch sprachliche Fähigkeiten fördert.

Darüber hinaus kann das Elterngerät als Gateway auch hier regeln, welche Funktionen über Tasten oder Sensoren verfügbar sind. Die Tastenbelegung und Sensorlogik kann dabei durch die App am Elterngerät konfigurierbar sein, etwa zur Auswahl altersgerechter Inhalte oder zur Begrenzung der Funktionsvielfalt.

Ferner kann vorgesehen sein, dass bestimmte Tasten- oder Sensorsignale als Auslöser für eine Lerninteraktion mit dem KI-System dienen. Eine definierte Betätigung kann beispielsweise als Lernsignal gewertet werden, welches dem Server über das Elterngerät mitteilt, dass das Kind bereit für eine neue Aufgabe ist.

Dadurch wird eine kindgesteuerte, aber dennoch kontrollierte Interaktion mit dem Lernsystem ermöglicht, was insbesondere die Eigenmotivation und Selbstwirksamkeit des Kindes stärken kann.

Auch können Tasten zum Beispiel dem Lernen der Körperteile dienen, ein Druck auf die "Hand" dann zur Ausgabe "Hand" führen oder das Berühren beider Hände zur Frage: "Willst Du Tanzen?":

Nachfolgend wird anhand einer Figur ein Ausführungsbeispiel der vorliegenden Erfindung erläutert. Dieses Ausführungsbeispiel dient der Illustration der Erfindung und beschränkt den Schutzbereich nicht.

Gemäß dem bevorzugten Ausführungsbeispiel der vorliegenden Erfindung wird das erfindungsgemäße sprachbasierte Lernsystem zunächst wie folgt in Betrieb genommen.

Ein Nutzer, beispielsweise ein Elternteil, ein Großelternteil oder ein Betreuer, lädt zunächst eine auf einem mobilen Endgerät (1), vorzugsweise einem Smartphone oder Tablet, ausführbare Software-Anwendung ("App") herunter und installiert diese auf dem Elterngerät (1). Die App dient gemäß der Erfindung als alleinige Gateway-Schnittstelle zwischen einem spielzeugartigen Endgerät (3) und einem externen Server (5), welcher ein Kl-gestütztes Sprachverarbeitungssystem und optional ein KI-Wissensmodell bereitstellt.

Nach der Installation wird die App gestartet und führt den Nutzer durch einen Einrichtungsprozess. Dabei wird zunächst ein Benutzerkonto eingerichtet, bei dem Authentifizierung mittels Passwort, PIN oder biometrischer Daten vorgesehen sein kann.

Anschließend erfolgt die erstmalige Kopplung des spielzeugartigen Endgeräts (3) mit dem Elterngerät (1) über eine drahtlose Verbindung, vorzugsweise via Bluetooth. Das Elterngerät (1) erkennt das spielzeugartige Endgerät (3) und autorisiert dieses eindeutig, wobei die Authentifizierung gemäß bekannten Bluetooth-Sicherheitsprotokollen erfolgt.

Über die App kann der Nutzer nun die Einstellung entsprechend des Entwicklungsstandes des Kindes treffen, also z.B. die Sprechgeschwindigkeit, die Komplexität des Satzbaues etc. entsprechend einstellen. Daneben kann der Nutzer Module auswählen und so kann beispielsweise festgelegt werden, dass nur Inhalte zu Farben, Tieren und Zahlen zugelassen sind. Zusätzlich können aktive Tageszeiten, Interaktionshäufigkeit und Pausenzeiten definiert werden. Dies erfolgt bevorzugt Kl-gestützt.

Im Anschluss wird das spielzeugartige Endgerät (3) - hier in Form eines Kuscheltieres - dem Kind zur Verfügung gestellt und das Gespräch beginnt.

Als Erweiterung zu dem oben genannten kann das Kind ergänzende Lernmaterialien, darunter eine erfindungsgemäße Lupe (7) mit integriertem oder verbundenem NFC-Leser (9) sowie mehrere Lernkarten (11) oder Objekte mit eingebetteten NFC-Chips erhalten. Diese physischen Elemente dienen zur Interaktion mit dem Lernsystem.

Während der Nutzung erkennt der NFC-Leser (9) in der Lupe (7) durch Annähern oder Berühren der Lernkarten die codierten Informationen. Diese werden an das Elterngerät (1) übertragen, dort verarbeitet und gegebenenfalls an den externen Server (5) weitergeleitet. Die daraufhin generierte Sprachantwort wird nach optionaler inhaltlicher Prüfung durch die App an das Kuscheltier (3) zur akustischen Ausgabe gesendet. Beispielsweise wird nach Erkennen einer Karte (11) mit einem Tiermotiv durch das Kuscheltier (3) der Name des Tieres genannt, gefolgt von einer Frage wie "Was frisst der Löwe?", die das Kind beantworten kann.

Während der Interaktion kann das Elterngerät (1) fortlaufend als Kontrollinstanz fungieren. Es ermöglicht eine laufende Überwachung der Sprachinhalte, protokolliert Interaktionsverläufe und informiert optional über Lernfortschritte. Über ein Dashboard in der App kann der Nutzer (Eltern oder Bezugspersonen) prüfen, welche Themen behandelt wurden, welche Antworten gegeben wurden und ob ggf. sensible Inhalte (z. B. persönliche Angaben) erkannt und unterdrückt wurden.

Optional kann eine lokale Spracherkennung auf dem Elterngerät (1) eingesetzt werden, sodass Spracheingaben des Kindes zunächst lokal in Text umgewandelt und vor einer eventuellen Weiterleitung an den Server gefiltert werden. Dies erhöht die Datensicherheit zusätzlich und reduziert die Notwendigkeit für permanente Online-Verbindungen.

Dieses Ausführungsbeispiel illustriert die praktische Nutzung des erfindungsgemäßen Systems im Alltag und zeigt, wie durch die Kombination aus technischer Trennung der Kommunikationswege, elterlicher Inhaltssteuerung und optional haptischer Lernmaterialien eine sichere, kontrollierte und kindgerechte Sprachlernumgebung realisiert werden kann.

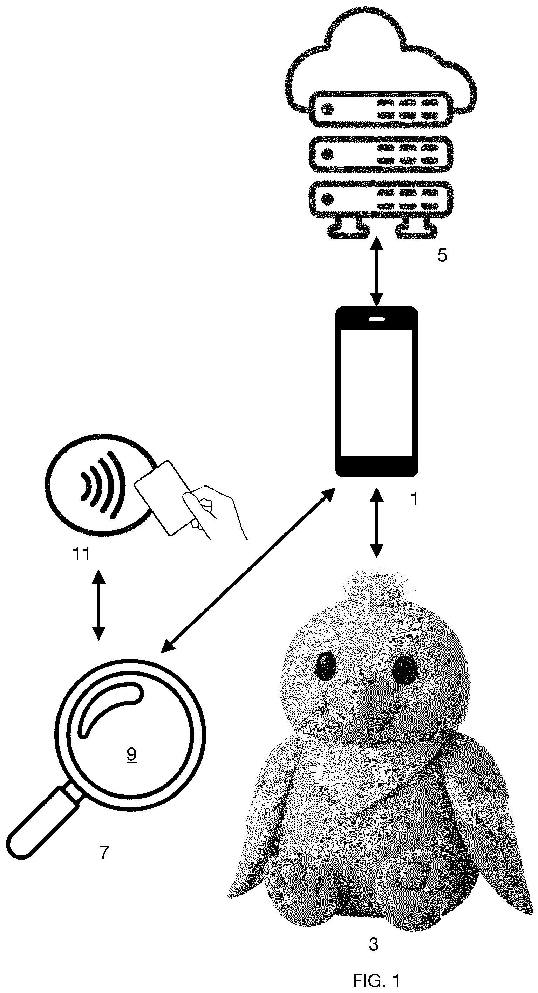

## Patentansprüche

1. Sprachbasiertes Lernsystem für Kinder, umfassend:
ein spielzeugartiges Endgerät ohne Bildschirmanzeige mit einem Mikrofon und einem Lautsprecher zur auditiven Interaktion mit dem Kind,
ein Elterngerät in Form eines Smartphones, Tablets, Computers und/oder einer Smartwatch, das über eine drahtlose Verbindung mit dem Spielzeug kommuniziert, und
einen externen Server mit einem Sprachverarbeitungssystem, wobei das Elterngerät als alleinige Vermittlungsinstanz (Gateway) zur Kommunikation mit dem externen Server dient und dafür eingerichtet ist, Sprachinhalte zu kontrollieren, Kommunikationsverbindungen zu filtern und Nutzer zu authentifizieren, und wobei
der externe Server ein Kl-basiertes Sprachverarbeitungssystem umfasst,
das eingehende Spracheingaben analysiert und, insbesondere kindgerechte, Sprachantworten generiert, welche über das Elterngerät an das Spielzeug zur Ausgabe über den Lautsprecher übermittelt werden und
optional der externe Server auch ein KI-Wissensmodell umfasst.

2. Sprachbasiertes Lernsystem nach Anspruch 1, **dadurch gekennzeichnet, dass**
das spielzeugartige Endgerät keine bildschirmbasierte Anzeigeeinheit und keine eigene Verbindung zu einem Kommunikationsnetzwerk aufweist.

3. Sprachbasiertes Lernsystem nach Anspruch 1 oder 2, **dadurch gekennzeichnet, dass**
die Kommunikation zwischen dem spielzeugartigen Endgerät und dem Elterngerät drahtlos über Bluetooth, WLAN und/oder NFC erfolgt.

4. Sprachbasiertes Lernsystem nach einem der vorangehenden Ansprüche, **dadurch gekennzeichnet, dass** das Elterngerät eine Software-Anwendung (App) ausführt, welche als Gateway-Schnittstelle zum externen Server dient und die Funktionen der Dateninhaltskontrolle, Kommunikationsfilterung und/oder Nutzeridentifizierung bereitstellt.

5. Sprachbasiertes Lernsystem nach Anspruch 4, **dadurch gekennzeichnet, dass**
das spielzeugartige Endgerät Spracheingaben des Kindes mittels lokaler Spracherkennung (Voice-to-Text) und/oder auf einem weiteren Server vorverarbeitet, sodass nur vorverarbeitete oder gefilterte Textdaten an den externen Server übertragen werden.

6. Sprachbasiertes Lernsystem nach Anspruch 4 oder 5, **dadurch gekennzeichnet, dass**
das Elterngerät eine Nutzeroberfläche bereitstellt, über die Lerninhalte für das spielzeugartige Endgerät gezielt ausgewählt, freigegeben oder deaktiviert werden können.

7. Sprachbasiertes Lernsystem nach einem der vorhergehenden Ansprüche, **dadurch gekennzeichnet, dass**
das Elterngerät den Zugriff auf den Server nur nach erfolgreicher Identifikation und/oder Authentifizierung eines autorisierten Nutzers freigibt.

8. Sprachbasiertes Lernsystem nach einem der vorangehenden Ansprüche, **dadurch gekennzeichnet, dass**
das spielzeugartige Endgerät einen NFC-Leser aufweist und/oder mit einem solchen verbindbar oder verbunden ist und/oder das Elterngerät mit einem NFC-Leser verbindbar oder verbunden ist, der dafür eingerichtet ist, mit einem NFC-Chip versehene Objekte zu erkennen und bei Erkennung eines solchen Objekts eine entsprechende Sprachausgabe, Vorlesefunktion oder sonstige Audioausgabe in dem spielzeugartigen Endgerät direkt und/oder durch das Elterngerät auszulösen.

9. Sprachbasiertes Lernsystem nach Anspruch 8, **dadurch gekennzeichnet, dass**
das Objekt ein Spielgegenstand, insbesondere ein Spieltier, ein Lebensmittelmodell, eine Karte und/oder ein Buch bzw. eine Seite eines Buches ist, wobei bei Erkennung des NFC-Chips eine zugehörige Bezeichnung oder inhaltlich passende akustische Ausgabe aktiviert wird.

10. Sprachbasiertes Lernsystem nach Anspruch 8 oder 9, **dadurch gekennzeichnet, dass**
der erkannte Objektinhalt als zusätzlicher Parameter in die Sprachverarbeitung des Servers einfließt, um kontextabhängige Lerninhalte oder Dialogantworten zu generieren.

11. Sprachbasiertes Lernsystem nach einem der vorangehenden Ansprüche, **dadurch gekennzeichnet, dass**
das spielzeugartige Endgerät eine oder mehrere Tasten und/oder Sensoren umfasst, durch deren Betätigung vordefinierte Aktionen ausgelöst werden.

12. Verfahren zur interaktiven Spracherlernung für Kinder, insbesondere umfassend ein System nach einem der vorangehenden Ansprüche. umfassend folgende Schritte:
- Aufnehmen einer Spracheingabe durch ein spielzeugartiges Endgerät mit Mikrofon,
- Übertragung der Spracheingabe an ein Elterngerät über eine drahtlose Verbindung von dem spielzeugartigen Endgerät mittels drahtloser Datenübertragung,
- Weiterleitung der Spracheingabe oder einer durch das Elterngerät vorverarbeiteten Textfassung an einen externen Server mit einem Klbasierten Sprachverarbeitungssystem und optional KI-Wissensmodell,
- Generieren einer Sprachantwort durch den Server,
- Rückübertragung der Sprachantwort über das Elterngerät an das Spielzeug und Ausgabe über dessen Lautsprecher.

13. Verfahren nach Anspruch 12, **dadurch gekennzeichnet, dass** die Spracheingabe auf dem Elterngerät vorverarbeitet und gefiltert wird, bevor sie an den Server übermittelt wird.

14. Verfahren nach Anspruch 12 oder 13, **dadurch gekennzeichnet, dass** bei Erkennung eines mit einem NFC-Chip versehenen Objekts durch das spielzeugartige Endgerät und/oder ein externes NFC-Lesegerät ein zusätzlicher Objektidentifikator an das Elterngerät und von dort optional an den Server übermittelt wird, um direkt vom Elterngerät oder vom Server eine objektbezogene Sprachantwort zu generieren.

15. Verfahren nach einem der Ansprüche 12 bis 14, **dadurch gekennzeichnet, dass** das Elterngerät die Kommunikation mit dem Server nur nach erfolgreicher Authentifizierung eines autorisierten Nutzers aktiviert.
